# EUROPEAN PATENT APPLICATION

(11) **EP 2 905 709 A2**
(43) Date of publication of application: **12.08.2015**
(21) Application number: 15154632.2
(22) Date of filing: 11.02.2015
(51) Int. Cl.: G06F 17/30, G06F 11/14

(54) **METHOD AND APPARATUS FOR REPLICATION OF FILES AND FILE SYSTEMS USING A DEDUPLICATION KEY SPACE**

(30) Priority: 11.02.2014 US 201414177899
(71) Applicant: Atlantis Computing, Inc., Mountain View, CA 94043 (US)
(72) Inventor: Venkatesh, Chetan, San Mateo, CA 94403 (US); Coleridge, Toby Jonathon, San Mateo, CA 94403 (US); Zhang, Pu Paul, San Jose, CA 95120 (US); Auradkar, Vikram, Los Altos, CA 94022 (US); Parameswaran, Seshan, Sunnyvale, CA 94086 (US); Iyer, Kartikeya, Campbell, CA 95008 (US); Zhang, Qian, Sunnyvale, AZ 94087 (US); Lu, Jin, Sunnyvale, CA 94086 (US)
(74) Representative: Nguyen Van Yen, Christian

(57) **Abstract**

A method and apparatus for rapid replication of deduplicated file system data is described. The method may include initiating replication of a file from a source deduplication system to a destination deduplication system, and transferring deduplication metadata for each block of the file from the source deduplication system to the destination deduplication system. The method may also include transferring an identifier file from the source deduplication system to the destination deduplication system that includes a block number corresponding to a block of the file and a unique identifier value generated from the block of the file. The method may also include receiving a data request file from the destination deduplication system, and transferring the blocks of data identified in the data request file to complete replication of the file on the destination deduplication system.

## Description

### TECHNICAL FIELD

Embodiments of the invention relate to the field of data storage, and more particularly, to the rapid replication of deduplicated file system data.

### BACKGROUND

Conventional solutions to replicating virtual machines are resource intensive. To replicate a virtual machine image (i.e., to copy a virtual machine image from one storage location to another), requires reading the source virtual machine image block by block, and copying each block to the target replicated virtual machine image. This is a time-consuming operation since the sizes of virtual machine images can be hundreds of gigabytes or more. As a result, the transfer of data for a full copy of a virtual machine image can take many hours to complete, consume a vast amount of network bandwidth, and occupy otherwise valuable computing resources. Furthermore, in some instances the source virtual machine is not accessible during replication.

This problem is exacerbated as the use of virtualized computing technologies grows. That is, a greater use of virtual systems will result in hundreds of thousands of virtual machine images being transferred, replicated, and deployed at any given time.

### BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.
**Figure 1** is a block diagram of exemplary system architecture for enabling replication of files or file systems using deduplication data.
**Figure 2** is a block diagram of one embodiment of a source deduplication system replicator and a destination deduplication system replicator.
**Figure 3** is a flow diagram of one embodiment of a method for replicating virtual machine files.
**Figure 4A** is a flow diagram of one embodiment of a method for replication, using deduplication metadata for a file or file system to be replicated.
**Figure 4B** is a flow diagram of one embodiment of a method for replicating a file or file system based on the deduplication metadata.
**Figure 5** illustrates an example schematic drawing of a computer network infrastructure.

### DETAILED DESCRIPTION

A method and apparatus is disclosed herein for replicating virtual machine files and file systems using a deduplication key space. In one embodiment, the method includes replicating one or more virtual machine files, which may include a single virtual machine file, a plurality of files that make up a virtual machine, or an entire virtual machine file system, from a source deduplication system to a destination deduplication system. Initially deduplication metadata is transferred from the source deduplication system to the destination deduplication system. In one embodiment, deduplication metadata describes a relationship between original data and deduplicated data file(s) managed by the source deduplication system. As discussed in greater detail below, data deduplication eliminates duplicate copies of data as a form of data compression to maximize storage capacity and minimize time to storage.

After transfer of the deduplication metadata to the destination deduplication system, source deduplication system transfers an identifier file that identifies blocks of data in the one or more virtual machine files to be replicated. In one embodiment, the identifier file enables destination deduplication system to determine which data blocks from the one or more virtual machine files are already present at the destination deduplication system (i.e., data blocks that do not have to be transferred), and which data blocks from the one or more virtual machine files are not present at the destination deduplication system (i.e., data blocks that are needed in order to complete the replication of the one or more virtual machine files).

In one embodiment, the source deduplication system receives a request from the destination deduplication system that specifies needed data blocks from the one or more virtual machine files. The source deduplication system then transfers the blocks identified in the request to the destination deduplication system. Once the destination deduplication system has the needed data blocks (i.e., those that were not already present on the destination deduplication system), the replication of the one or more virtual machine files is complete. That is, utilizing the deduplication metadata that describes the relationship between virtual machine data files and deduplicated data, the existing data blocks on destination file system, and the received data blocks, the destination deduplication system may recreate, execute, or otherwise use the one or more replicated virtual machine files locally at the destination deduplication system.

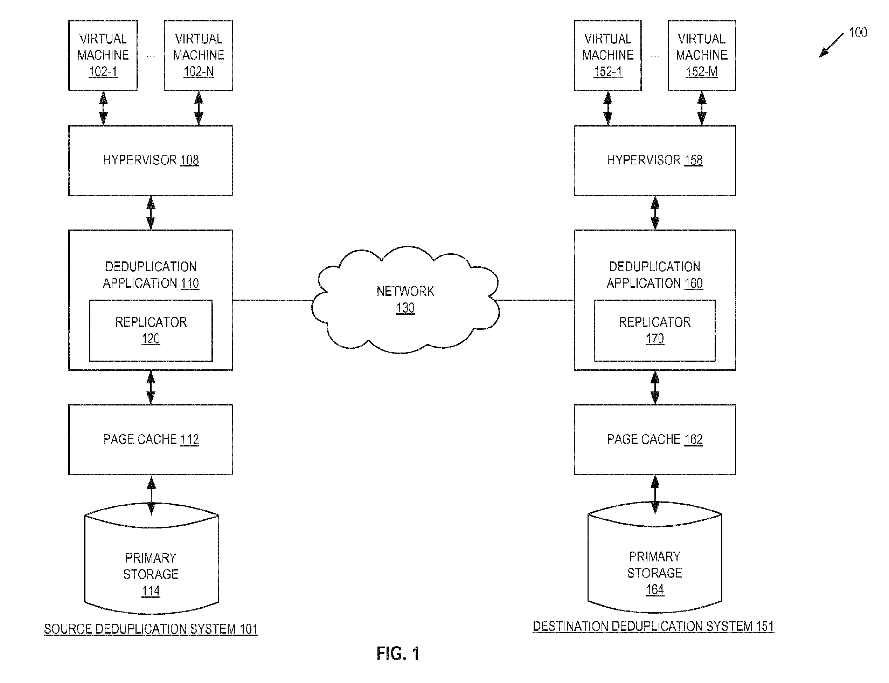

**Figure 1** is a block diagram of exemplary system architecture for enabling replication of files or file systems using deduplication data. In one embodiment, the system 100 includes a source deduplication system 101 and a destination deduplication system 151, where each deduplication system provides a virtualized computing environment. Although only two deduplication systems are illustrated, any number of deduplication-based computing environments may be utilized in accordance with the discussion herein. Furthermore, the designation of the virtualized computing environments as a "source" and a "destination" is for illustrative purposes only, as data may be replicated to or from either system.

The source deduplication system 101 and the destination deduplication system 151 may be coupled to a network 130. In one embodiment, the source deduplication system 101 and destination deduplication system 151 are communicatively coupled to the network 130 to enable communication between, for example, replicators 120 and 170. In one embodiment, network 130 enables communication between systems 101 and 151 using any of the standard protocols for the exchange of information. In one embodiment, the source deduplication system 101 and the destination deduplication system 151 are coupled to network 130 via a wireless or wired connection.

The source deduplication system 101 and the destination deduplication system 151 may run on one Local Area Network (LAN), may be incorporated into the same physical or logical system, or may be different physical or logical systems. Alternatively, the source deduplication system 101 and the destination deduplication system 151 may reside on different LANs, wide area networks, etc. that may be coupled together via a public network such as the Internet, separated by firewalls, routers, and/or other network devices. In yet another configuration, the source deduplication system 101 and the destination deduplication system 151 may reside on the same server, or different servers, coupled to other devices via a public network (e.g., the Internet) or a private network (e.g., a LAN). It should be noted that various other network configurations can be used including, for example, hosted configurations, distributed configurations, centralized configurations, etc.

In one embodiment, the virtualized computing environment of source deduplication system 101 includes virtual machines (hereafter "VM"s) 102-1 through 102-N, hypervisor 108, deduplication application 110, page cache 112, and primary storage 114. In one embodiment, destination deduplication system 151 includes VMs 152-1 through 152-M, hypervisor 156, deduplication application 160, page cache 162, and primary storage 164. The number, type, configuration, topology, connections, or other aspects of source deduplication system 101 and destination deduplication system 151 may be varied and are not limited to the examples shown and described.

In reference to source deduplication system 101, VMs 102-1 through 102-N may be instances of an operating system running on various types of hardware, software, circuitry, or a combination thereof (e.g., x86 servers) that are managed by hypervisor 108. As shown, deduplication application 110 may be used to deduplicate data to be written to primary storage 114 using page cache 112 as a memory into which data may be read or written before being asynchronously (or, in some embodiments, synchronously) written back to primary storage 114.

In one embodiment, deduplication applications 110 and 160 remove duplicate information in VM files in the write path of the virtualized computing environments (i.e., Virtual Desktop Infrastructure ("VDI")/Hosted Virtual Desktop ("HVD")) of the source and destination deduplication systems 101 and 151. Duplicate information is any block information that is already stored in primary storage 114, from a prior copy of the same data or from a different data set.

In some embodiments, a virtualized computing environment may be composed of a plurality of VMs, such as virtual machines 102-1 through 102-N and 151-1 through 151-M, running desktop operating systems (e.g., Windows XP or Windows 7 Enterprise by MICROSOFT CORPORATION® of Redmond, Wash.) on a virtualized hardware layer (such as those provided by companies such as VMWARE®, CITRIX®, MICROSOFT®, REDHAT®, or other makes of operating systems). A virtualized software layer (e.g., hypervisors 108 or 158) provides memory, disk (e.g., storage), and processing (i.e., CPU) resources to the VMs. The plurality of VMs, in one embodiment, access storage through deduplication applications 110, 160.

In one embodiment, deduplication applications 110 and 160 are configured to identify and remove duplicate information, replacing the duplicate information with pointers to a single copy of data, while a write operation from one or more of the VMs is still "in-flight" (i.e., sent to, but not written to permanent storage or disk (hereafter referred to as "primary storage")). In one embodiment, the deduplication uses a Random Access Memory ("RAM") of a deduplication application 110 or 160. In one embodiment, deduplication applications 110 and 160 may be configured to perform operations (e.g., read, write, copy on write, and others) on blocks of fixed lengths, such as 4 kilobyte blocks. In one embodiment, the deduplication applications 110, 160 process data "inline," i.e., in the data path or connection between a VM and primary storage, in real time or substantially real-time. In one embodiment, deduplication applications 110 and 160 may be configured to provide an inline and real-time or substantially real-time deduplication of data as the data is in-flight from one or more of VMs 102-1 through 102-N and 152-1 through 152-M to primary storage system (e.g., primary storage 114 or primary storage 164).

A primary storage system may be implemented using a computer hard disk based on rotational spindle, a computer hard disk based on Solid State Technologies, a redundant array of independent disks (hereafter "RAID") storage system that aggregates multiple computer hard disks, a storage area network (hereafter "SAN"), network attached storage (hereafter "NAS") that aggregates multiple RAID storage systems, among others.

In one embodiment, deduplication applications 110 and 160 are configured to eliminate duplicate copies of data to effect a form of data compression to maximize storage capacity of primary storages 114 and 164, and minimize time to storage. In a deduplication-based file system, such as those implemented by source deduplication system 101 and destination deduplication system 151, deduplication applications 110 and 160 identify duplicate copies of data, and implement reference links to point to the original data rather than storing another, redundant copy. As a result, duplicate data is not stored in storage, according to embodiments discussed herein. For example, deduplication applications 110 and 160 can store a reference link to the original data, instead of storing the duplicate data, in the form of deduplication metadata, which functions to describe the relationship between the original data and the deduplicated data. Examples of techniques used in deduplication of virtual machine files are described in U.S. Patent Application No. 13/269,525, filed October 7, 2011, entitled "Deduplication of Virtual Machine Files in a Virtualized Desktop Environment," which is incorporated herein in its entirety.

In embodiments discussed herein, deduplication applications 110 and 160 store deduplication metadata in a metadata file, metadata table, metadata database, or other format, in order to describe or map the relationships between the deduplicated data and the original data. In one embodiment, the deduplication metadata is organized to reflect individual files, as well as entire deduplicated file systems that are stored on primary storage 114 and/or 164. For example, a metadata file, table, or database can store data representing a block number that is associated with the physical location or data block of data in a storage device in a deduplicated file system. The metadata representing a block of a file or file system can contain data representing information such as a block number, data associated with a unique identifier that uniquely identifies the data in the file or file system, a reference link that associates the block of deduplication metadata to a physical location where the corresponding data block for the file can be located. In one embodiment, the unique identifier is a hash value generated by a hashing function, such as a SHA-1, MD5, etc.

In one embodiment, deduplication metadata created for one or more files or file systems by deduplication applications 110 and 160, is utilized to replicate data between deduplication systems 101 and 151. In one embodiment, the data replicated between systems 101 and 151 may be an individual file (e.g., a VM file), a VM image (e.g., a collection of files that form the VM), an entire file system, etc. The data replicated from source deduplication system 101 is rapidly replicated to destination deduplication system 151 in real-time or near real-time utilizing deduplication metadata. This avoids the needless transfer of repetitive data, as well as data that may already be stored by the destination deduplication system 151. VM files or VM images may consist of a high degree of repeated data. Therefore, the deduplication metadata based replication techniques enable significant replication performance gains over conventional replication techniques by avoiding having to transfer every block of a file, VM image, file system, etc. from source deduplication system 101 to destination deduplication system 151.

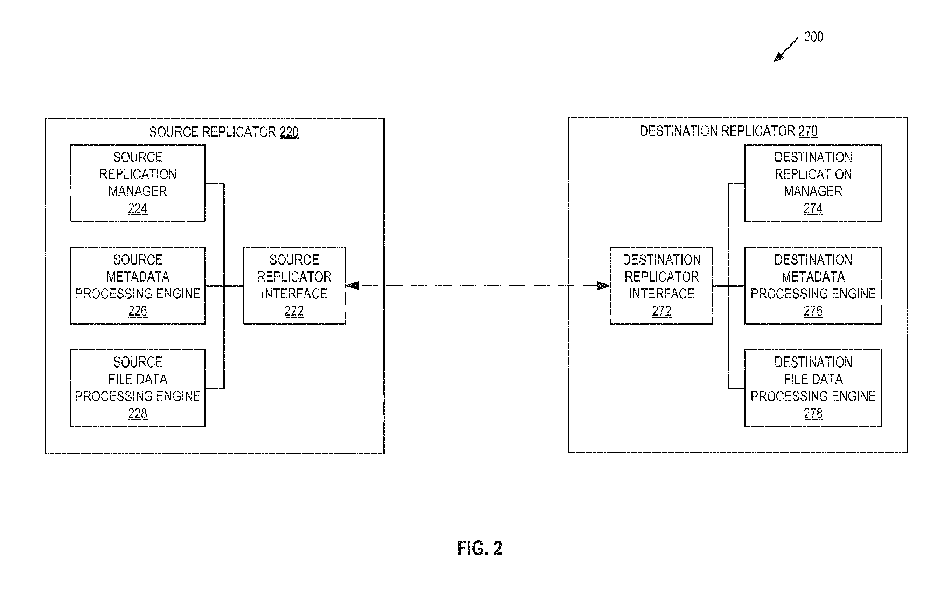

**Figure 2** is a block diagram of one embodiment 200 of a source replicator 220 and a destination replicator 270. Source replicator 220 and destination replicator 270 enable rapid data replication between replicator 120 and replicator 170 discussed above in **Figure 1****.** Furthermore, designation of the replicators as a "source" or "destination" is merely for illustrative purposes. In one embodiment, a single replicator may act as a source and a destination replicator. However, for the purposes of this discussion, a source replicator 220 is the source for data to be replicated to the destination replicator 270.

In one embodiment, source replicator 220 includes a number of processing modules, which may be implemented as hardware, software, firmware, or a combination, such as source replicator interface 222, source replication manager 224, source metadata processing engine 226, and source file data processing engine 228. Destination replicator 270 similarly includes a number of processing modules, which may be implemented as hardware, software, firmware, or a combination, such as destination replicator interface 272, destination replication manager 274, destination metadata processing engine 276, and destination file data processing engine 278.

In one embodiment, replication of data from source replicator 220 to destination replicator 270 begins in response to source replication manager 224 identifying a replication event associated with data at a source deduplication system (e.g., system 101 of Figure 1). The replication event, in one embodiment, may be a user request, the system meeting one or more configurable parameters, in response to automated periodic replication timers, as well as other triggers. In one embodiment, the parameters may include ensuring the high-availability (HA) of a selected file, file system, or virtual machine (e.g., VM 102-1 through 102-N), a certain amount of data having been locally stored, modified, or deleted, a particular type of change being made, etc.

In one embodiment, source replication manager 224 generates a replication request. In one embodiment, the replication request includes data about a file or file system to be replicated (e.g., permissions, file types, etc.), as well as data about deduplication, such as the size, file type, format, etc. of the deduplication metadata file. Source replication manager 224 sends the replication request to destination replicator 270 via source replicator interface 222. In one embodiment, the replication request, as well as the other data, is exchanged between source replicator 220 and destination replicator 270 via a network, such as network 130. As noted above, network 130 may be a LAN, WAN, a public network, a wired connection, or another type of connection.

Destination replication manager 274 receives the request and acknowledges the request to source replicator 220. In one embodiment, in response to the replication request, destination replication manager 274 allocates storage space within the deduplication system (e.g., system 151 of Figure 1) for the deduplication metadata associated with the file or file system to be replicated. In one embodiment, the allocation of storage space is based on the metadata file size information in the replication request.

After source replication manager 224 receives the request acknowledgment from destination replicator 270, source replication manager 224, in one embodiment, causes source metadata processing engine 226 to collect deduplication metadata for the data to be replicated. In one embodiment, the deduplication metadata collected by metadata processing engine includes metadata block numbers, and the metadata associated with those blocks. In one embodiment, source replication manager 224 then transfers the deduplication metadata on a block-by-block basis, in chunks of multiple blocks, or as a complete deduplication metadata file, table, database, etc. to destination replicator 270.

Destination replicator 170 receives the deduplication metadata for the data to be replicated, and destination replication manager 274 stores the deduplication metadata in a destination deduplication system (e.g., system 151). In one embodiment, the deduplication metadata is stored to copy or replicate the deduplication metadata and physical storage layout of the data to be replicated from the source deduplication system.

In one embodiment, after source replication manager 224 determines that the deduplication metadata has been transferred to destination replicator 270, source replication manager 224 instructs metadata source processing engine 226 and source file data processing engine 228 to construct an identifier file for the data to be replicated. In one embodiment, the identifier file is a hash file, which includes a unique hash value identifier for each block of data in a source file or file system that is to be replicated, and includes an association between block numbers and hash value identifiers. In one embodiment, only unique (e.g., non-repeating) hash value identifiers are added to the identifier file. Once the identifier file is constructed, source replication manager 224 transfers the file to destination replicator 270.

Destination replicator 270 receives the identifier file and destination replication manager 274 utilizes the identifiers within identifier file to determine which data blocks are already stored by the destination deduplication system (e.g., system 151). In one embodiment, destination replication manager 274 queries destination metadata processing engine 276 and destination file data processing engine 278 in order to compare hash values from the identifier file with hash values in the destination deduplication system's own deduplication metadata. Based on the comparison, destination replicator 270 determines which blocks of data from the file or file system to be replicated are already stored locally on the destination deduplication system, and which blocks of data are needed in order to replicate the file or file system. If there are data blocks that are not locally stored, destination replication manager 274 constructs a request file that includes the needed blocks based on, in one embodiment, the block numbers of the needed blocks as specified in the identifier file. Destination replication manager 274 then sends the request file to source replicator 220.

Source replication manager 224 utilizes the request file to respond to destination replicator 270 with the needed data blocks. In one embodiment, for each block number identified in the request file, source replication manager 224 queries file data processing engine 228 for the actual block of data. The blocks of data, along with their associated block numbers, are then transferred by source replication manager 224 to destination replicator 270. In one embodiment, the data blocks and bock number pairs are individually transferred, transferred in sets of blocks, or transferred all at once to destination replicator 270.

Destination replication manager 274 receives the data blocks and block numbers from source replicator 220 and writes the data blocks to a local version of the replicated file or file system. In one embodiment, each data block is written to a file offset in the replicated file or file system pointed to by the block number. After destination replication manager 274 receives and stores each of the data blocks, the replication of the file or file system between source replicator 220 and destination replicator 270 is complete, and the process is terminated.

As discussed herein the replication of a file or file system between deduplication systems utilizes deduplication metadata to greatly increase the efficiency of the replication process. Consider an example where a VM image is to be replicated from one system to another system. VM images vary in size, but are commonly in the range of 100 gigabytes. For such a VM, a typical replication process would require that at least 100 gigabytes be transferred in order to replicate the VM's image. However, data deduplication can decrease transfer and storage needs by a factor of 10-1, or more. Using the techniques set forth herein, which are directed to exchanging deduplication metadata and deduplicated data, and further reducing the exchange to only the actual data (from the deduplicated data) needed by a destination system, the transfer of data for replication may be reduced by more than the deduplication factor. For example, to replicate a 100 gigabyte VM, only 10 gigabytes plus overhead in the exchanges discussed, would be transferred to effect the VM replication. Such a savings greatly increase the efficiency associated with replication of files, file systems, VM images, etc., while at the same time preserving network resources and avoiding network congestion. As such, virtual machine files can be replicated rapidly between a source and one or more destination systems, even when replication occurs over a slow network. Furthermore, in the embodiments discussed herein, the replication can be effected in real-time or near real-time as changes are made to a file, file system, etc. to enable a remote system to contain a mirror of the file, file system, or entire VM.

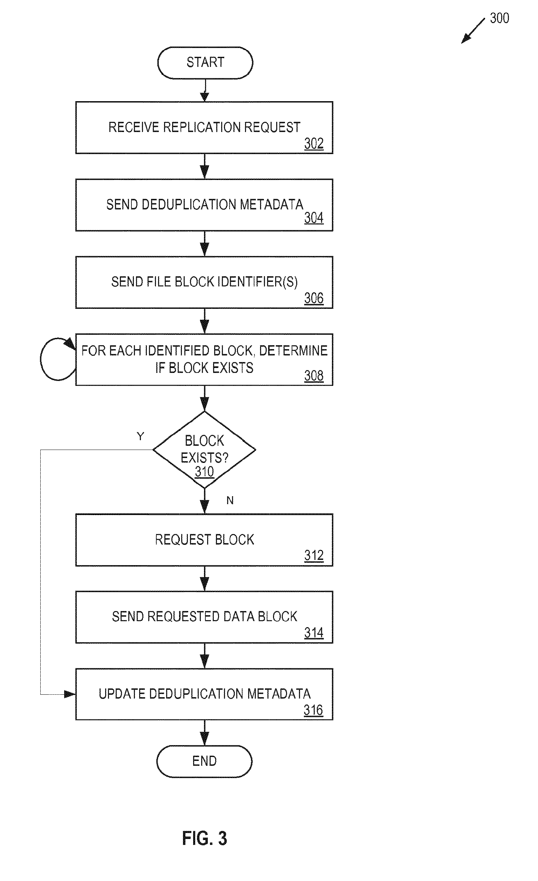

Figure 3 is a flow diagram of one embodiment of a method 300 for replicating virtual machine files. The method 300 is performed by processing logic that may comprise hardware (circuitry, dedicated logic, etc.), software (run on a general purpose computer system or a dedicated machine), firmware, or a combination. In one embodiment, the method 300 is performed by a source replicator and a destination replicator, such as source replicator 120 or 220 and destination replicator 170 and 270, described above with respect to **Figure 1** and **Figure 2****.**

Referring to **Figure 3****,** the process begins by receiving a replication request (processing block 302). In one embodiment, the request specifies the replication of a specific VM file, VM image, or VM file system to be transferred from a source deduplication system to a destination deduplication system. In the embodiments discussed herein, the source and destination deduplication system may be the same deduplication system. Furthermore, more than one destination deduplication system may be specified in the request.

Processing logic then sends deduplication metadata from the source deduplication system to the destination deduplication system (processing block 304). In one embodiment, the transfer of deduplication metadata may include transfer of a metadata file size that enables the destination deduplication system to allocate storage for the deduplication metadata for the file, VM image, or file system to be replicated.

Processing logic then sends identifiers that identify one or more blocks of data in the specific VM file, VM image, or VM file system to be replicated (processing block 306). In one embodiment, the identifiers uniquely identify data blocks and enable the destination deduplication system to determine which data blocks from the specific VM file, VM image, or VM file system are already present at the destination deduplication system, and which data blocks are needed in order to complete the replication. In one embodiment, for each identified block, processing logic determines if the block exists in the destination deduplication system (processing block 308). When an identified block does not exist at the destination deduplication system (processing block 310), processing logic requests the identified block from the source deduplication system (processing block 312). In one embodiment, the request may specify the block identifier for the block that does not exist locally at the destination deduplication system. Processing logic responds to the request and sends the requested data block to the destination deduplication system (processing block 314). Processing logic may then update the destination system deduplication metadata (processing block 316), such as referencing a storage location of the received data block. In one embodiment, processing logic may request, and hence receive, individual blocks or sets of blocks.

When the block already exists at the destination deduplication system (processing block 310), processing logic may advance to processing block 316 and update the destination system's deduplication metadata (processing block 316). In one embodiment, the updates include updating the deduplication metadata to point to the existing and local version of the data block, and incrementing a deduplication metadata reference counter.

Once the destination deduplication system has all of the needed data blocks (i.e., those that were not already present on the destination deduplication system), the replication of the specific VM file, VM image, or VM file system is complete, and the process ends.

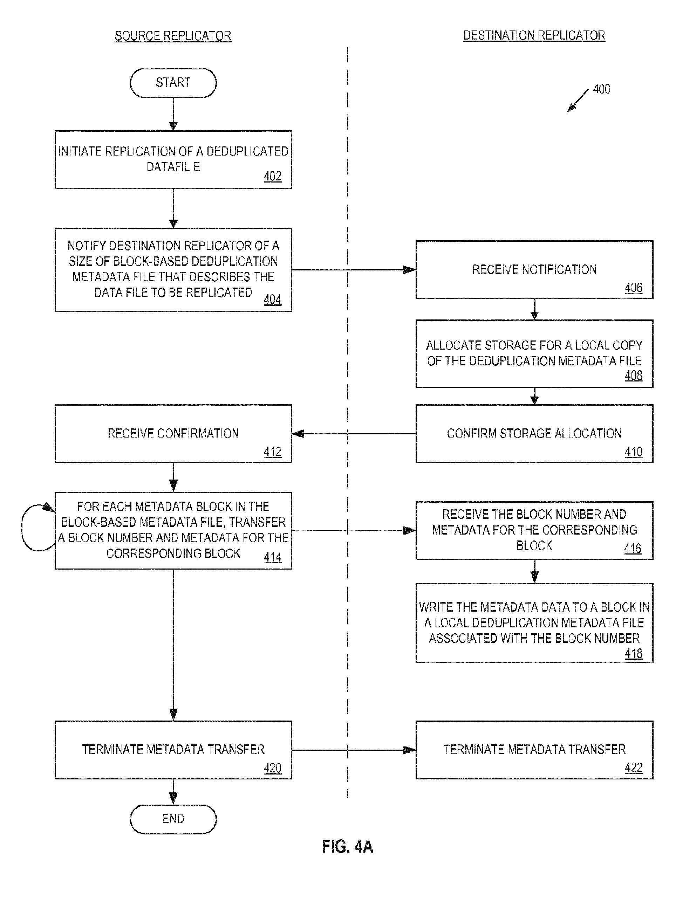

**Figure 4A** is a flow diagram of one embodiment of a method 400 for replication, using deduplication metadata for a file or file system to be replicated. The method 300 is performed by processing logic that may comprise hardware (circuitry, dedicated logic, etc.), software (run on a general purpose computer system or a dedicated machine), firmware, or a combination. In one embodiment, the method 300 is performed by a source replicator and a destination replicator, such as source replicator 120 or 220 and destination replicator 170 and 270, described above with respect to **Figure 1** and **Figure 2****.**

Referring to **Figure 4A****,** processing logic begins by initiating replication of a deduplicated data file at a source replicator (processing block 402). The deduplicated file may be a single file or a collection of files (e.g., a file system), and the deduplicated file may be a virtual machine file, such as a virtual machine image, data generated by a running virtual machine, etc. The initiation of replication by processing logic may occur in response to a user request, or automatically in response to one or more configurable parameters (e.g., an H-A server setting, periodic replication factor(s), at a time when a source server system is inactive, bandwidth availability, etc.).

Processing logic notifies a destination replicator of a size of block-based deduplication metadata file associated with the data file to be replicated (processing block 404). In one embodiment, the size corresponds to a disk size of the storage of the deduplication metadata. The deduplication metadata file may be a table, database, or another type of file.

Processing logic of a destination replicator receives the notification (processing block 406) and allocates storage for a local copy of the deduplication metadata file (processing block 408). In one embodiment, the storage is allocated based on the size information received with the notification. Processing logic confirms the storage allocation to the source replicator (processing block 410).

In response to receiving the storage allocation confirmation (processing block 412), processing logic transfers a block number and deduplication metadata for each block to the destination replicator (processing block 414). In one embodiment, the block number and deduplication metadata pairs are streamed to the destination replicator, until all metadata blocks are transferred. In another embodiment, sets of two or more block number and deduplication metadata pairs are transferred to the destination replicator, until all metadata blocks are transferred. In yet another embodiment, a collected file, table, database, etc. is transferred as a whole, to destination replicator.

Processing logic at the destination replicator receives the block number and metadata pairs (processing block 416), and, for each block, writes the metadata to a block of the local copy of the deduplication metadata file associated with the metadata block number (processing block 418).

After processing logic of the source replicator has transferred the block number and deduplication metadata pairs associated with the data file to be replicated, processing logic then terminates the metadata transfer (processing block 420). When the destination replicator has written each of the received metadata blocks to the appropriate offset in the local deduplication metadata file, it also terminates the metadata transfer (processing block 422). The destination replicator now has a local copy (i.e., a replicated version) of the deduplication metadata file for the file to be replicated, and this portion of the process ends.

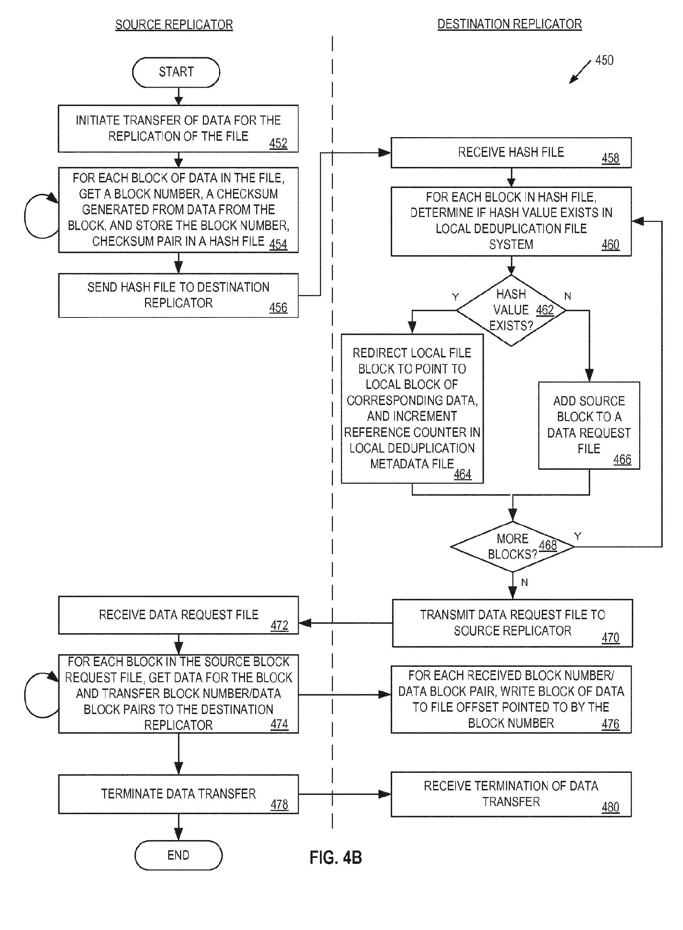

**Figure 4B** is a flow diagram of one embodiment of a method 450 for replicating a file or file system based on the deduplication metadata. The method 450 is performed by processing logic that may comprise hardware (circuitry, dedicated logic, etc.), software (such as is run on a general purpose computer system or a dedicated machine), firmware, or a combination. In one embodiment, the method 300 is performed by a source replicator and a destination replicator, such as source replicator 120 or 220 and destination replicator 170 and 270, described above with respect to **Figure 1** and **Figure 2****.**

Referring to **Figure 4B****,** processing logic begins by initiating data transfer for replication of the file (processing block 452). In one embodiment, the processes of **Figures 4A** and **4B** are executed by processing logic in parallel. After a certain number, percentage, or other configurable quantity of metadata is transferred to destination deduplication system by the process of **Figure 4A****,** source deduplication system may begin the transfer of data as discussed below in **Figure 4B****.** Furthermore, the processes described in **Figures 4A** and **4B** may also be run in parallel on parallel processing threads for different files, such as when multiple files are replicated at the same time. In another embodiment, processing block 452 is initiated at the conclusion of the metadata transfer as described above with respect to **Figure 4A****.**

For each block of data in a file to be replicated, processing logic obtains the block number and a hash value generated by the data in the block, and stores the block number-hash value pair in a replication hash file (processing block 454). Although hash values are discussed in **Figure 4B****,** other forms of unique identifiers may also be used as block identifiers, in other embodiments. In one embodiment, the replication hash file may be a table, database, or other file configured to communicate the block number-hash value pairs to the destination replicator. Processing logic of the source replicator then transfers the replication hash file to the destination replicator (processing block 456).

Processing logic at the destination replicator receives the replication hash file(s) (processing block 458). For each block in the received replication hash file, processing logic determines whether the hash value for the block exists in the local deduplication file system data (processing block 460). In one embodiment, processing logic queries local deduplication metadata to compare the hash values of locally stored blocks of data against the hash values associated the blocks in the replication hash file.

When there is a match and a hash value exists (processing block 462), processing logic determines that the destination replicator has access to a local copy of the data for the block, and that data need not be transferred to the destination replicator for replication of the file. The processing logic then updates a local file block for the replicated file to point to the local copy of the data, and increments a reference counter in local deduplication metadata for the found block (processing block 464). When a hash value does not exist (processing block 462), processing logic adds the source block number to a data request file (processing block 466).

When there are more blocks to process in the hash file (processing block 468), processing logic returns to block 410 to determine if a hash values exist for the blocks. When there are no remaining blocks, processing logic transfers the data request file to the source replicator (processing block 470). In another embodiment, processing logic transfers incremental data requests for individual blocks or sets of blocks while continuing to process blocks 462-468.

Processing logic of the source replicator receives the data request file (processing block 472) and for each block in the data request file, obtains data associated with the block and transfers the obtained block number-data block pairs to the destination replicator (processing block 474). The block number-data block pairs may be transferred individually, in sets, or as a whole to the destination replicator. Processing logic at the destination replicator, for each received block number-data block pair, writes the block of data to a file offset pointed to by the block number (processing block 476).

After processing logic of the source replicator has transferred each of the block number-data block pairs, processing logic terminates the data transfer (processing block 478). When transfer of the data is terminated, processing logic of the destination replicator has written each of the received blocks to the appropriate offset in a local file, and also terminates the data transfer (processing block 480). The destination replicator now has a local copy of the data blocks, which were not previously stored locally by a destination deduplication system, and the process ends. Based on the locally stored and updated deduplication metadata for the replicated file, and the transfer of the blocks from the source deduplication system needed for the replicated file, the destination deduplication system has a replicated and deduplicated version of the file.

In the embodiments discussed above, where the replication of a file includes an update to the file, it is possible that one or more blocks of data are removed from a file on the source deduplication system prior to an update replication operation. During the replication processes discussed above in **Figure 4B****,** destination deduplication system processes the removal of the one or more data blocks by updating its deduplication metadata accordingly (e.g., deleting one or more blocks of data, or altering reference pointers for removed blocks of data), and decrementing any deduplication reference counters to the locally stored data, from which the one or more blocks depend. Furthermore, in one embodiment, the destination deduplication system can maintain a record of the different versions of a file, virtual machine image, etc. Since different versions of a file involve a rearrangement of the deduplication metadata, as well as potential addition and deletion of the deduplication metadata, a copy of the current data and corresponding metadata could be stored, archived, or otherwise preserved to show different versions of the file, virtual machine image, etc. over time.

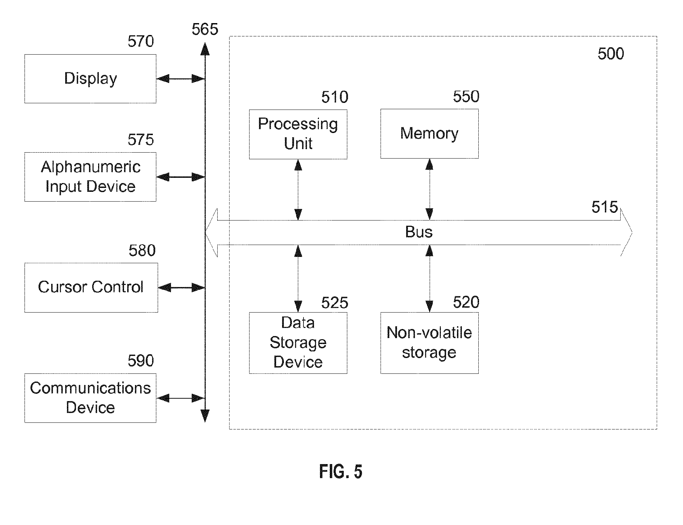

**Figure 5** is one embodiment of a computer system that may be used with the present invention. It will be apparent to those of ordinary skill in the art, however that other alternative systems of various system architectures may also be used.

The data processing system illustrated in **Figure 5** includes a bus or other internal communication means 515 for communicating information, and a processor 510 coupled to the bus 515 for processing information. The system further comprises a random access memory (RAM) or other volatile storage device 550 (referred to as memory), coupled to bus 515 for storing information and instructions to be executed by processor 510. Main memory 550 also may be used for storing temporary variables or other intermediate information during execution of instructions by processor 510. The system also comprises a read only memory (ROM) and/or static storage device 520 coupled to bus 515 for storing static information and instructions for processor 510, and a data storage device 525 such as a magnetic disk or optical disk and its corresponding disk drive. Data storage device 525 is coupled to bus 515 for storing information and instructions.

The system may further be coupled to a display device 570, such as a cathode ray tube (CRT) or a liquid crystal display (LCD) coupled to bus 515 through bus 565 for displaying information to a computer user. An alphanumeric input device 575, including alphanumeric and other keys, may also be coupled to bus 515 through bus 565 for communicating information and command selections to processor 510. An additional user input device is cursor control device 580, such as a mouse, a trackball, stylus, or cursor direction keys coupled to bus 515 through bus 565 for communicating direction information and command selections to processor 510, and for controlling cursor movement on display device 570.

Another device, which may optionally be coupled to computer system 500, is a communication device 590 for accessing other nodes of a distributed system via a network. The communication device 590 may include any of a number of commercially available networking peripheral devices such as those used for coupling to an Ethernet, token ring, Internet, or wide area network. The communication device 590 may further be a null-modem connection, or any other mechanism that provides connectivity between the computer system 500 and the outside world. Note that any or all of the components of this system illustrated in **Figure 5** and associated hardware may be used in various embodiments of the present invention.

It will be appreciated by those of ordinary skill in the art that any configuration of the system may be used for various purposes according to the particular implementation. The control logic or software implementing the present invention can be stored in main memory 550, mass storage device 525, or other storage medium locally or remotely accessible to processor 510.

It will be apparent to those of ordinary skill in the art that the system, method, and process described herein can be implemented as software stored in main memory 550 or read only memory 520 and executed by processor 510. This control logic or software may also be resident on an article of manufacture comprising a computer readable medium having computer readable program code embodied therein and being readable by the mass storage device 525 and for causing the processor 510 to operate in accordance with the methods and teachings herein.

The present invention may also be embodied in a handheld or portable device containing a subset of the computer hardware components described above. For example, the handheld device may be configured to contain only the bus 515, the processor 510, and memory 550 and/or 525. The handheld device may also be configured to include a set of buttons or input signaling components with which a user may select from a set of available options. The handheld device may also be configured to include an output apparatus such as a liquid crystal display (LCD) or display element matrix for displaying information to a user of the handheld device. Conventional methods may be used to implement such a handheld device. The implementation of the present invention for such a device would be apparent to one of ordinary skill in the art given the disclosure of the present invention as provided herein.

The present invention may also be embodied in a special purpose appliance including a subset of the computer hardware components described above. For example, the appliance may include a processor 510, a data storage device 525, a bus 515, and memory 550, and only rudimentary communications mechanisms, such as a small touch-screen that permits the user to communicate in a basic manner with the device. In general, the more special-purpose the device is, the fewer of the elements need be present for the device to function.

In the preceding description, numerous details are set forth. It will be apparent, however, to one of ordinary skill in the art having the benefit of this disclosure, that the present invention may be practiced without these specific details. In some instances, well-known structures and devices are shown in block diagram form, rather than in detail, in order to avoid obscuring the present invention.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "initiating", "transferring", "receiving", "creating", "obtaining", "writing", "determining", "updating", "adding", "associating", or the like, refer to the actions and processes of a computer system, or similar computing device, that manipulates and transforms data represented as physical (e.g., electronic) quantities within the computer system's registers and memories into other data similarly represented as physical quantities within the computer system memories or registers or other such information storage, transmission or display devices.

The present invention also relates to an apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions.

The processes and displays presented herein are not inherently related to any particular computer or other apparatus. Various general purpose systems may be used with programs in accordance with the teachings herein, or it may prove convenient to construct a more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

It is to be understood that the above description is intended to be illustrative, and not restrictive. Many other embodiments will be apparent to those of skill in the art upon reading and understanding the above description. The scope of the invention should, therefore, be determined with reference to the appended claims, along with the full scope of equivalents to which such claims are entitled.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as may be suited to the particular use contemplated.

In some embodiments, when the destination deduplication system determines that a block of data is available on the destination deduplication system, updating a file block in the file on the destination deduplication system to point to the locally stored block of data, and incrementing a reference counter to the locally stored block in deduplication metadata at the destination deduplication system; and when the destination deduplication system determines that a block of data has been removed from the file by the source deduplication system, updating removing the reference pointer to the block of data and decrementing a reference counter corresponding to the locally stored block in deduplication metadata at the destination deduplication system, the identifier file is a hash file, and the unique identifier value is a hash value generated from application of a hash function to the block of the file.

In some other embodiments, the source deduplication system and the destination deduplication system are located in different real-world locations.

In some other embodiments, the file comprises a deduplicated virtual machine file system.

In some other embodiments, the source deduplication system and the destination deduplication system comprise the same deduplication system.

In some other embodiments, the source deduplication system and the destination deduplication system comprise different deduplication systems that perform replication of the file in parallel

## Claims

1. A method, comprising:
initiating replication of a file from a source deduplication system to a destination deduplication system;
transferring deduplication metadata from the source deduplication system to the destination deduplication system, wherein the deduplication metadata is deduplication metadata for each block of the file;
transferring an identifier file from the source deduplication system to the destination deduplication system, wherein the identifier file includes a block number corresponding to a block of the file and a unique identifier value generated from the block of the file;
receiving a data request file from the destination deduplication system that includes block numbers of any blocks of data from the file that are not stored by the destination deduplication system; and
transferring the blocks of data identified in the data request file, with corresponding block numbers to the destination deduplication system to complete replication of the file on the destination deduplication system.

2. The method of claim 1, further comprising:
creating a local deduplication metadata file at the destination deduplication system;
for each block in a deduplication metadata file maintained at the source deduplication system, corresponding to blocks of the file, obtaining a block number and a corresponding block of deduplication metadata data;
transferring pairs of block numbers and blocks of deduplication metadata data form the source deduplication system to the destination deduplication system; and
the destination deduplication system writing received blocks of deduplication metadata data to the local deduplication metadata file at an offset pointed to by the deduplication metadata data.

3. The method of claim 2, wherein the deduplication metadata comprises a block number, a reference to a block of data within the file, and a reference counter indicative of a number of references to the block of data.

4. The method of claim 1, further comprising:
when the destination deduplication system determines that a block of data is available on the destination deduplication system, updating a file block in the file on the destination deduplication system to point to the locally stored block of data, and incrementing a reference counter to the locally stored block in deduplication metadata at the destination deduplication system; and
when the destination deduplication system determines that a block of data has been removed from the file by the source deduplication system, updating removing the reference pointer to the block of data and decrementing a reference counter corresponding to the locally stored block in deduplication metadata at the destination deduplication system.

5. The method of claim 4, further comprising:
for each block number identified in the data request file, transferring the data from the identified block number, and the block number, from the source deduplication system to the destination deduplication system; and
in response to receipt of a block number and block of data pair, the destination deduplication system writing the block of data to an offset pointed to by the block number in a replicated version of the file.

6. The method of claim 1, wherein the file comprises a plurality of deduplicated virtual machine files in a deduplicated file system, the plurality of deduplicated virtual machine files corresponding to a virtual machine image.

7. The method of claim 1, wherein the source deduplication system and the destination deduplication system are in-band deduplicating file systems that perform data deduplication in real-time or near real-time.

8. The method of claim 1, wherein the replication of the file is initiated asynchronously from one or more read or write operations performed on the data file at the source deduplication system.

9. The method of claim 1, wherein initiating replication of a file occurs in response to the source deduplication system identifying a replication event.

10. The method of claim 1, replication of the file on the destination deduplication system occurs in a random access memory of the source deduplication system and a random access memory of the destination deduplication system prior to storage of a replicated file in a primary storage at the destination deduplication system.

11. A non-transitory computer readable storage medium including instructions that, when executed by a processor, cause the processor to perform the method of any of claims 1 to 10.

12. A system comprising:
a memory of a source deduplication system to store deduplication metadata and a file; and
a source replication manager to initiate replication of a file from a source deduplication system to a destination deduplication system,
a source metadata processor to transfer deduplication metadata from the source deduplication system to the destination deduplication system, wherein the deduplication metadata is deduplication metadata for each block of the file;
a source file processor to
transfer an identifier file from the source deduplication system to the destination deduplication system, wherein the identifier file includes a block number corresponding to a block of the file and a unique identifier value generated from the block of the file,
receive a data request file from the destination deduplication system that includes block numbers of any blocks of data from the file that are not stored by the destination deduplication system, and
transfer the blocks of data identified in the data request file, with corresponding block numbers to the destination deduplication system to complete replication of the file on the destination deduplication system.

13. The system of claim 12, further comprising:
the source metadata processor to transfer pairs of block numbers and blocks of deduplication metadata data form the source deduplication system to the destination deduplication system; and
a destination metadata processor to create a local deduplication metadata file at the destination deduplication system, for each block in a deduplication metadata file maintained at the source deduplication system, corresponding to blocks of the file, obtain a block number and a corresponding block of deduplication metadata data, and write received blocks of deduplication metadata data to the local deduplication metadata file at an offset pointed to by the deduplication metadata data.

14. The system of claim 12, further comprising:
a destination file processor to determine that a block of data is available on the destination deduplication system, and
the destination metadata processor to update a file block in the file on the destination deduplication system to point to the locally stored block of data, and incrementing a reference counter to the locally stored block in deduplication metadata at the destination deduplication system.

15. The system of claim 12, wherein the file comprises a plurality of deduplicated virtual machine files in a deduplicated file system, the plurality of deduplicated virtual machine files corresponding to a virtual machine image.
